# EUROPÄISCHE PATENTSCHRIFT

(11) **EP 1 814 749 B1**
(45) Veröffentlichungstag und Bekanntmachung des Hinweises auf die Patenterteilung: **29.07.2009**
(21) Anmeldenummer: 05810967.9
(22) Anmeldetag: 15.11.2005
(51) Int. Cl.: B60H 1/00

(54) **KÄLTESPEICHER-AKKUMULATOR**
COLD STORAGE ACCUMULATOR
ACCUMULATEUR DE FROID

(30) Priorität: 16.11.2004 DE 102004055342
(43) Veröffentlichungstag der Anmeldung: 08.08.2007
(73) Patentinhaber: Behr GmbH & Co. KG, 70469 Stuttgart (DE)
(72) Erfinder: KOHL, Michael, 74321 Bietigheim (DE); MANSKI, Ralf, 70197 Stuttgart (DE); STRAUSS, Thomas, 73274 Notzingen (DE)
(74) Vertreter: Mantel, Berthold Friedrich
(86) Internationale Anmeldenummer: PCT/EP2005/012253
(87) Internationale Veröffentlichungsnummer: WO 2006/053720

(56) Entgegenhaltungen:
- EP-A- 0 633 154
- US-A1- 2003 159 455
- US-B1- 6 343 485

## Beschreibung

Die Erfindung betrifft einen Kältespeicher-Akkumulator, insbesondere für eine Kraftfahrzeug-Klimaanlage, gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Aus der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum bekannt, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Jedoch lässt eine entsprechende Klimaanlage noch Wünsche offen.

Es ist weiterhin aus der US2003/0159455, der als nächstliegender Stand der Technik gesehen wird, ein Kältespeicher-Akkumulator vorgesehen, der ein Kältespeicherelement aufweist, insbesondere für eine Kraftfahrzeug-Klimaanlage, der in einem Kältemittelkreislauf angeordnet ist und zum Abkühlen von zu konditionierender Luft für einen Kraftfahrzeug-Innenraum dient, wobei im Kältespeicherelement ein Kältespeichermedium enthalten ist, wobei die kleinste Abmessung des Kältespeicherelements maximal 2,6 mm beträgt und das Kältespeicherelement zumindest auf den beiden Außenseiten, die einander in Richtung der kleinsten Abmessung gegenüberliegen, in Kontakt mit einem zeitweise kühlenden und zeitweise zu kühlenden Medium steht. Eine Dicke eines Kältespeicherelements die maximal 2,6 mm beträgt, stellt eine optimale Dynamik beim Be- und Entladen des im Kältespeicherelements enthaltenen Kältespeichermediums sicher, so dass innerhalb kurzer Zeit ein Beladen möglich ist, womit auch bei kurzen Fahrzeiten zwischen den einzelnen Stopps, z.B. im Stadtverkehr, ein ausreichendes Beladen möglich ist, zudem jedoch eine ausreichende Kühlleistung zur Verfügung steht, die bei Bedarf schnell abgerufen werden kann. Dies ermöglicht einen großen Klimakomfort bei einem stop-and-go-Betrieb.

Der Kältespeicher-Akkumulator ist hierbei in einem niederdruckseitigen Kältemittelsammler im Kältemittel-Kreislauf nach dem die Luft für den Fahrzeuginnenraum kühlenden Verdampfer und vor dem bei laufendem Motor das Kältemittel umwälzenden Kompressor angeordnet, so dass auch bei einem Motorstillstand, bei welchem gegebenenfalls keine Umwälzung des Kältemittels im Kältemittel-Kreislauf erfolgt, durch die Wirkung des Kältespeicher-Akkumulators für eine gewisse Zeit Kältemittel dem Verdampfer zugeführt werden und in diesem von der denselben durchströmenden Luft Wärme entziehen kann.

Es ist Aufgabe der Erfindung, einen verbesserten Kältespeicher-Akkumulator zur Verfügung zu stellen. Diese Aufgabe wird gelöst durch einen Kältespeicher-Akkumulator mit den Merkmalen des Anspruchs 1. Vorteilhafte Ausgestaltungen sind Gegenstand der Unteransprüche.

Die kleinste Abmessung eines Kältespeicherelements beträgt vorzugsweise minimal 0,4 mm, so dass eine ausreichende Kühldauer sichergestellt werden kann.

Die Anordnung des Kältespeicherelements in einem Gehäuse ist im Prinzip beliebig, sollte aber so gewählt werden, dass eine Strömung der das Kältespeicherelements umströmenden Mediums nicht oder nicht wesentlich beeinträchtigt wird. Sind mehrere Kältespeicherelemente vorgesehen, so können dieselben geordnet oder ungeordnet angeordnet sein.

Vorzugsweise beträgt die Wandstärke des Kältespeicherelements maximal 0,4 mm, so dass ein schnelles Be- und Entladen des Kältespeicherelements möglich ist, und der Behälter einen nur unwesentlichen Einfluss auf die Dynamik hat. Aus Stabilitätsgründen sollte die Wandstärke in der Regel mindestens 0,1 mm betragen.

Das Verhältnis von Umfang in einem Schnitt quer zur Längserstreckung des Kältespeicherelements in einer Ebene, in welcher die kleinste Abmessung liegt, an der Innenseite zur hiervon eingeschlossenen Innenfläche des Kältespeicherelements beträgt vorzugsweise 1/mm bis 10/mm.

Die Wärmeleitfähigkeit der Wand des Kältespeicherelements beträgt vorzugsweise 100 bis 500 W/mK, insbesondere 200 bis 300 W/mK. Somit kommen als Materialien bevorzugt Aluminium und Kupfer, jedoch auch Graphit, Stahl, Kupfer-Zink-Legierungen oder Kunststoffe in Frage.

Die Wärmeleitfähigkeit des Kältespeichermediums beträgt vorzugsweise 0,1 bis 0,3 W/mK, insbesondere 0,16 bis 0,24 W/mK.

Erfindungsgemäß ist das Kältespeicherelement durch mindestens einen Kanal eines Mehrkanal-Flachrohres, vorzugsweise alle Kanäle desselben, gebildet.

Beim Speichermedium handelt es sich vorzugsweise um ein PCM-Material (phase change material), das bevorzugt kongruent schmelzende Medien, insbesondere Decanol, Tetra-, Penta- oder Hexadecan, LiClO₃^{·}H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Kältespeichermediums liegt vorzugsweise in einem Bereich von 0°C bis 30°C, insbesondere von 2°C bis 15°C, insbesondere bevorzugt von 4°C bis 12°C. Dadurch wird sichergestellt, dass der Wärmetauscher nicht vereist.

Im Inneren des Kältespeicherelements kann neben dem Kältespeichermedium auch eine Einlage mit einer hohen Oberfläche, wie beispielsweise ein Rippenblech, eine Turbulenzeinlage, ein Gestrick, ein Vlies oder ein Schaum angeordnet sein, welche eine Strömungsausbildung im Kältespeichermedium be- oder gar verhindert.

Im Folgenden wird die Erfindung anhand eines Ausführungsbeispiels unter Bezugnahme auf die Zeichnung im Einzelnen erläutert. In der Zeichnung zeigen:
- Fig. 1: eine Darstellung eines erfindungsgemäßen Kältespeicher-Akkumulators ohne Darstellung der radialen Außenwand,
- Fig. 2: eine Darstellung des Kältespeicher-Akkumulators von Fig. 1 ohne Deckel,
- Fig. 3 eine: Darstellung des Kältespeicher-Akkumulators von Fig. 1 ohne Deckel und ohne eines Teils der als Kältespeicherelemente dienenden Flachrohre,
- Fig. 4: einen Längsschnitt durch den Kältespeicher-Akkumulator von Fig. 1,
- Fig. 5: einen Querschnitt durch den Kältespeicher-Akkumulator von Fig. 1,
- Fig. 6: eine perspektivische Ansicht des Kältespeicher-Akkumulators von Fig. 1,
- Fig. 7: einen Schnitt quer durch ein Kältespeicherelement, wie es beim Kältespeicher-Akkumulator von Fig. 1 verwendet wird, und

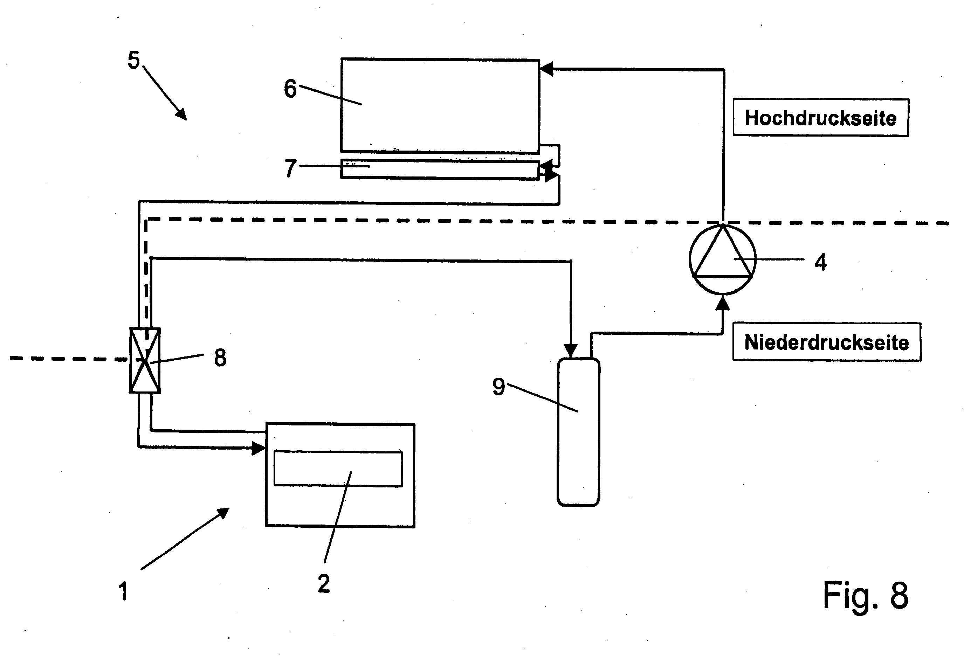

- Fig. 8: einen schematisch dargestellten Kältemittel-Kreislauf einer Klimaanlage gemäß einem Anwendungsbeispiel.

Eine Klimaanlage 1 für ein Kraftfahrzeug weist einen Verdampfer 2 auf, in dem flüssiges Kältemittel 3f zu gasförmigem Kältemittel 3g verdampft wird, wodurch dem den Verdampfer 2 durchströmenden Luftstrom Wärme entzogen wird, so dass der Fahrzeug-Innenraum bei Bedarf gekühlt werden kann.

Das Kältemittel 3, vorliegend R134a, wird mittels einer vom Kraftfahrzeug-Motor angetriebenen Kompressor 4 in einem Kältemittel-Kreislauf 5 umgewälzt, wobei es vom Kompressor 4 zu einem Kondensator 6, in dem es mit Hilfe der Umgebungsluft gekühlt wird, einem nachfolgend angeordneten Kältemittelsammler 7, einem Expansionsorgan 8, durch das das Kältemittel 3 entspannt und somit abgekühlt wird, einem Kältespeicher-Akkumulator 9, dessen Aufbau und Funktion an späterer Stelle näher beschrieben ist, zum Verdampfer 2, in dem es verdampft wird, und wieder zum Kompressor 4 gelangt.

Als Expansionsorgan 8 wird vorliegend ein thermostatisches Expansionsventil verwendet, das heißt die Öffnung wird in Abhängigkeit der Überhitzung am Verdampferaustritt geregelt, jedoch kann auch ein entsprechend geeignetes anderes Ventil oder eine Drossel verwendet werden, wie ein elektronisches Expansionsventil, das von außen geregelt wird, oder eine Festdrossel mit einer fixierten Öffnung. Zur Regelung des thermostatischen Expansionsventils ist ein Temperaturfühler vorgesehen, der austrittsseitig am Verdampfer 2 angeordnet ist.

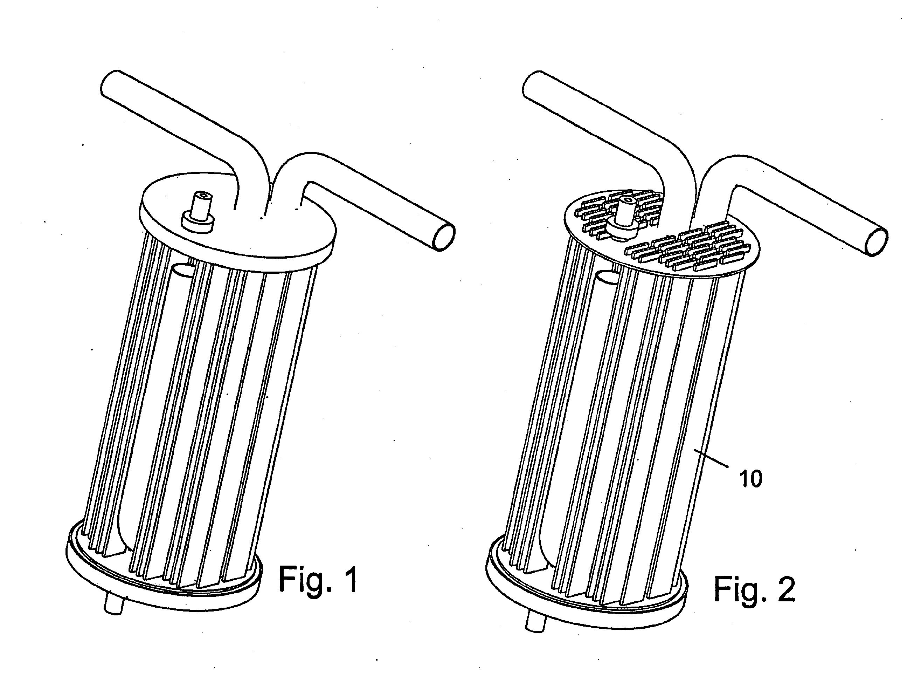

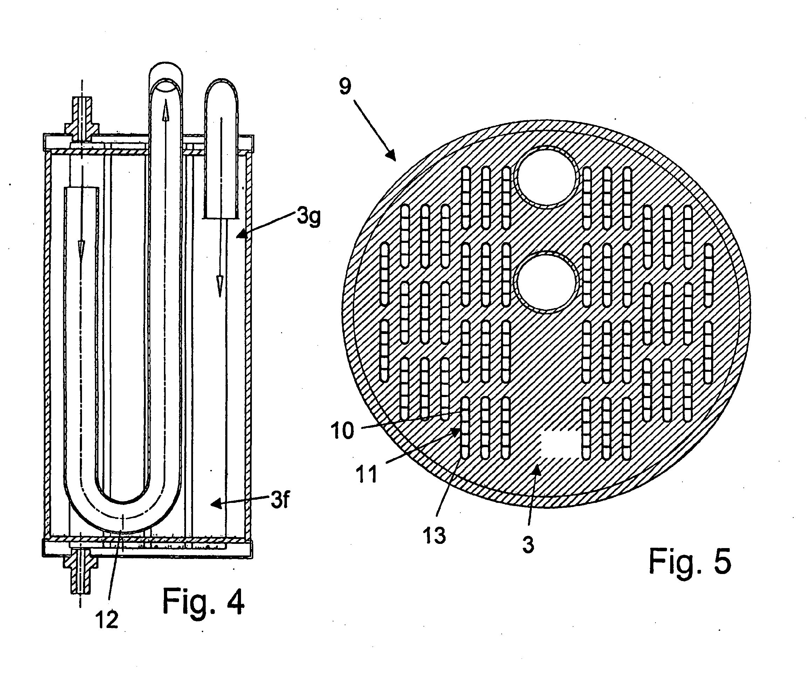

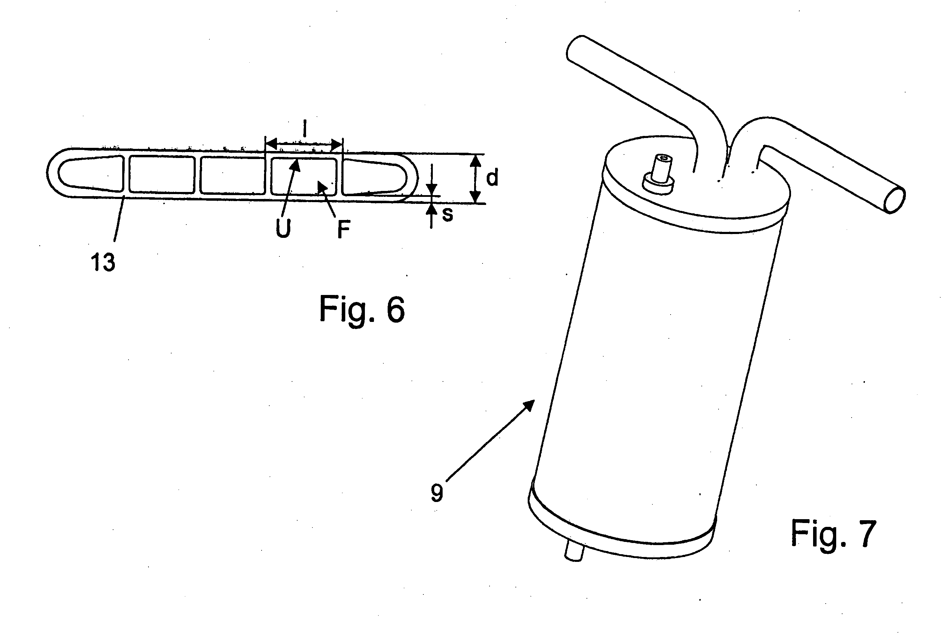

Der Kältespeicher-Akkumulator 9 ist in den Figuren 1 bis 6 näher dargestellt. Vorliegend handelt es sich beim Kältespeicher-Akkumulator 9 um eine Art Kältemittelsammler mit Ölrückführung in dessen Innenraum Kältespeicherelemente 10 vorgesehen sind, welche ein Kältespeichermedium 11 enthalten. Hierbei wird dem Kältespeicher-Akkumulator 9 von oben gasförmiges Kältemittel 3g zugeführt, im Inneren des Kältespeicher-Akkumulator 9 kondensiert das gasförmige Kältemittel 3g an den Wänden des KältespeicherAkkumulator 9 und fließt als flüssiges Kältemittel 3f nach unten, wo es sich auf einer Ölschicht sammelt. Um die Kühlfunktion des Verdampfers 2 auch im Falle eines kurzzeitigen Motorstillstands, d.h. bei einem Idle-stop-Betrieb, aufrecht zu erhalten, sind besagte Kältespeicherelemente 10 im Inneren des Kältespeicher-Akkumulators 9 vorgesehen, welche bei normalem Betrieb automatisch durch das sich sammelnde Kältemittel 3 gekühlt und somit auf die entsprechende Temperatur gebracht werden. Die gespeicherte Kälte kann dann beim Idle-stop-Betrieb abgegeben werden, so dass weiter vom Verdampfer 2 kommendes Kältemittel aufgenommen und der Kältemittelstrom durch den Verdampfer 2 befristet aufrecht erhalten werden kann. Das Expansionsventil 8 bleibt in Folge der hohen Temperatur am Verdampferaustritt geöffnet, so dass weiter Kältemittel 3 vom Kältemittelsammler 7 nachströmen kann.

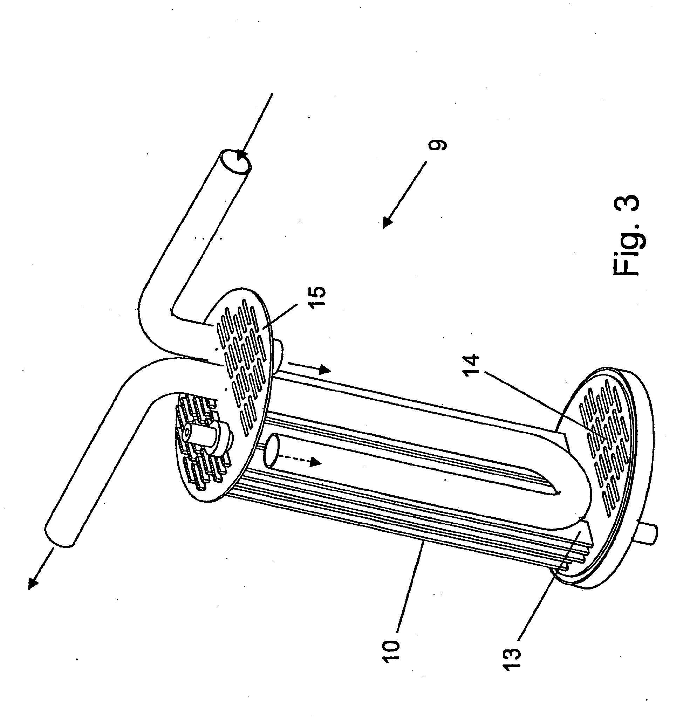

Obwohl sich bei einem Idle-stop-Betrieb flüssiges Kältemittel 3f und Öl im Kältespeicher-Akkumulator 9 unten sammeln, treten beim Wiederstarten des Kompressors 4 keine Probleme auf, da die gesammelte Flüssigkeit abgesaugt wird. Auf Grund eines U-Rohres im Kältespeicher-Akkumulator 9 (siehe Fig. 3) kann nur gasförmiges Kältemittel 3g zum Kompressor 4 gelangen. Die Rückführung des Öls ist durch eine Bohrung 12 unten im U-Rohr gewährleistet.

Im Folgenden wird näher auf die Kältespeicherelemente 10 des Kältespeicher-Akkumulators 9 eingegangen. Dieser Kältespeicherelemente 10 sind vorliegend direkt in den Kältespeicher-Akkumulator 9 integriert, und werden durch oben und unten verschlossene Flachrohre 13, vorliegend mit fünf getrennten Kanälen, gebildet, die mit dem Kältespeichermedium 11 gefüllt sind, das zur Kältespeicherung dient und sich durch eine hohe Wärmekapazität oder durch einen Phasenübergang im entsprechenden Temperaturbereich auszeichnet. Zur Vergrößerung der kontaktierenden Oberflächen und zur Verbesserung des Wärmeübergangs können zusätzlich Rippen oder andere Strukturen vorgesehen sein.

Die Flachrohre 13 weisen fünf Kanäle auf, die vollständig mit dem Kältespeichermedium 11 gefüllt sind. Die Dicke d der Flachrohre 13, welche der kleinsten Abmessung derselben entspricht, beträgt vorliegend 2,5 mm, die Wandstärke bzw. Stegbreite s beträgt 0,3 mm und die Länge I, welche der Breite eines Kanals zuzüglich der Wandstärke bzw. Stegbreite(n) entspricht, 3,5 mm, so dass sich ein in einem Schnitt quer zur Längserstreckung des Flachrohres 13 angeordneter Innenumfang von ca. 10 mm und eine entsprechende Innenfläche F von ca. 6 mm² und somit ein Verhältnis von U/F von ca. 1,7 mm ergibt.

Die Flachrohre 13 sind zur Positionierung und Fixierung durch entsprechend ausgebildete Öffnungen 14 in Platten 15 gesteckt (vgl. Fig. 3), und wurden nach dem Befüllen beidseitig verschlossen. Die Baugruppe Flachrohre 13 und Platten 15 sind in einem einen Druckbehälter bildenden Gehäuse angeordnet, das durch eine hohlzylindrische Wand und zwei Deckel gebildet wird, wobei in einem der beiden Deckel, welcher im eingebauten Zustand oben angeordnet ist, die Anschlüsse für die Kältemittel-Zu- und -Abführung vorgesehen sind. Auf Grund der Anordnung der Flachrohre 13 in den beiden Platten 15, die parallel zu den Deckeln im Gehäuse angeordnet sind, und eines Einbaus, gemäß dem einer der beiden Deckel oben angeordnet ist, sind die Flachrohre 13 gemäß dem vorliegenden Ausführungsbeispiel vertikal im Kraftfahrzeug angeordnet.

## Patentansprüche

1. Kältespeicher-Akkumulator mit Kältespeicherelement (10), insbesondere für eine Kraftfahrzeug-Klimaanlage (1), der in einen Kältemittelkreislauf (5) einsetzbar ist und zum Abkühlen von zu konditionierender Luft für einen Innenraum insbesondere des Kraftfahrzeugs dient, wobei im Kältespeicherelement (10) ein Kältespeichermedium (11) enthalten ist, wobei die kleinste Abmessung (d) des Kältespeicherelements (10) maximal 2,6 mm beträgt und das Kältespeicherelement (10) zumindest auf den beiden Außenseiten, die einander in Richtung der kleinsten Abmessung (d) gegenüberliegen, in Kontakt mit einem zeitweise kühlenden und zeitweise zu kühlenden Medium steht, **dadurch gekennzeichnet, dass** das Kältespeicherelement (10) durch mindestens einen Kanal eines Mehrkanal-Flachrohres (13) gebildet ist und das Mehrkanalflachrohr (13) zur Positionierung und Fixierung durch eine entsprechend ausgebildete Öffnung (14) in einer Platte (15) gesteckt ist.

2. Kältespeicher-Akkumulator nach Anspruch 1, **dadurch gekennzeichnet, dass** die kleinste Abmessung (d) des Kältespeicherelements (10) minimal 0,4 mm beträgt.

3. Kältespeicher-Akkumulator nach Anspruch 1 oder 2, **dadurch gekennzeichnet, dass** die Wandstärke (s) des Kältespeicherelements (10) maximal 0,4 mm beträgt.

4. Kältespeicher-Akkumulator nach einem der vorhergehenden Ansprüche, **dadurch gekennzeichnet, dass** das Verhältnis von Umfang (U) in einem Schnitt quer zur Längserstreckung des Kältespeicherelements (10) an der Innenseite zur hiervon eingeschlossenen Innenfläche (F) des Kältespeicherelements (10) 1/mm bis 10/mm beträgt.

5. Kältespeicher-Akkumulator nach einem der vorhergehenden Ansprüche, **dadurch gekennzeichnet, dass** die Wärmeleitfähigkeit der Wand des Kältespeicherelements (10) 100 bis 500 W/mK, insbesondere 200 bis 300 W/mK, beträgt.

6. Kältespeicher-Akkumulator nach einem der vorhergehenden Ansprüche, **dadurch gekennzeichnet, dass** die Wärmeleitfähigkeit des Kältespeichermediums (11) 0,1 bis 0,3 W/mK, insbesondere 0,16 bis 0,24 W/mK, beträgt.

7. Kältespeicher-Akkumulator nach einem der vorhergehenden Ansprüche, **dadurch gekennzeichnet, dass** das Kältespeichermedium (11) durch ein PCM-Material gebildet ist.

8. Kältespeicher-Akkumulator nach einem der vorhergehenden Ansprüche, **dadurch gekennzeichnet, dass** das Kältespeichermedium (16; 26) durch organische Hydrate gebildet ist oder dass als Kältespeichermedium (6) eine Salzlösung insbesondere mit LiClO₃·H₂O verwendet wird.

9. Kältespeicher-Akkumulator nach Anspruch 8, **dadurch gekennzeichnet, dass** das Kältespeichermedium (16; 26) durch Decanol, Tetradecan, Pentadecan oder Hexadecan gebildet ist.

10. Kältespeicher-Akkumulator nach einem der vorhergehenden Ansprüchen, **dadurch gekennzeichnet, dass** die Phasenumwandlungstemperatur des Kältespeichermediums (6; 16; 26) in einem Bereich von 0°C bis 30°C, insbesondere von 2°C bis 15°C, insbesondere bevorzugt von 4°C bis 12°C, liegt.

11. Kältespeicher-Akkumulator nach einem der vorhergehenden Ansprüchen, **dadurch gekennzeichnet, dass i**m Inneren des Kältespeicherelements (5) eine Einlage vorgesehen ist.

12. Kältespeicher-Akkumulator nach Anspruch 11, **dadurch gekennzeichnet, dass** die Einlage durch ein Rippenblech, eine Turbulenzeinlage, ein Gestrick, ein Vlies oder einen Schaum gebildet ist.

13. Kältespeicher-Akkumulator nach Anspruch 11 oder 12, **dadurch gekennzeichnet, dass** die Einlage aus Metall, insbesondere Aluminium, oder aus Kunststoff besteht.

14. Kältemittel-Kreislauf für eine Kraftfahrzeug-Klimaanlage (1) mit einem Kältemittel (3) umwälzenden Kompressor (4), einem Kondensator (6), einem Expansionsorgan (8) und einem Verdampfer (2), **gekennzeichnet durch** einen Kältespeicher-Akkumulator (9) gemäß einem der Ansprüche 1 bis 14.

15. Kältemittel-Kreislauf nach Anspruch 14, **dadurch gekennzeichnet, dass** der Kältespeicher-Akkumulator (9) in normaler Strömungsrichtung des Kältemittels (3) nach dem Verdampfer (2) und vor dem Kompressor (4) im Kältemittel-Kreislauf (5) angeordnet ist.

## Claims

1. Cold storage accumulator with a cold storage element (10), in particular for a motor vehicle air-conditioning unit (1), which can be incorporated in a coolant circuit (5) and which serves for cooling air that is being conditioned for an inside space, in particular of the motor vehicle, the cold storage element (10) containing a cold storage medium (11), the smallest dimension (d) of the cold storage element (10) being at most 2.6 mm and the cold storage element (10), at least on its two outer sides opposite one another in the direction of the said smallest dimension (d) being in contact with a medium which some of the time cools and some of the time is to be cooled, **characterised in that** the cold storage element (10) is formed by at least one channel of a multi-channel flat tube (13) and the said multi-channel flat tube (13) is inserted in a correspondingly shaped opening (14) in a plate (15) in order to position and fix the tube.

2. Cold storage accumulator according to Claim 1, **characterised in that** the smallest dimension (d) of the cold storage element (10) is a minimum of 0.4 mm.

3. Cold storage accumulator according to Claims 1 or 2, **characterised in that** the wall thickness (s) of the cold storage element (10) is at most 0.4 mm.

4. Cold storage accumulator according to any of the preceding claims, **characterised in that** the ratio of the circumference (U) in a section transverse to the length of the cold storage element (10) on the inside to the enclosed inside surface (F) of the cold storage element (10) is 1/mm to 10/mm.

5. Cold storage accumulator according to any of the preceding claims, **characterised in that** the thermal conductivity of the wall of the cold storage element (10) is 100 to 500 W/mK, in particular 200 to 300 W/mK.

6. Cold storage accumulator according to any of the preceding claims, **characterised in that the thermal conductivity of the** cold storage medium (11) is 0.1 to 0.3 W/mK, in particular 0.16 to 0.24 W/mK.

7. Cold storage accumulator according to any of the preceding claims, **characterised in that** the cold storage medium (11) consists of a POM material.

8. Cold storage accumulator according to any of the preceding claims, **characterised in that** the cold storage medium (16; 26) consists of organic hydrates, or a salt solution, in particular with LiClO₃.H₂O, is used as the cold storage medium (6).

9. Cold storage accumulator according to Claim 8, **characterised in that** the cold storage medium (16; 26) consists of decanol, tetradecane, pentadecane or hexadecane.

10. Cold storage accumulator according to any of the preceding claims, **characterised in that** the phase transformation temperature of the cold storage medium (6; 16; 26) is in a range from 0°C to 30°C, in particular from 2°C to 15°C and particularly preferably from 4°C to 12°C.

11. Cold storage accumulator according to any of the preceding claims, **characterised in that** an insert is provided inside the cold storage element (5).

12. Cold storage accumulator according to Claim 11, **characterised in that** the insert consists of a finned sheet, a turbulence insert, webbing, a fleece or a foam.

13. Cold storage accumulator according to Claims 11 or 12, **characterised in that** the insert is made of metal, in particular aluminium, or of plastic.

14. Coolant circuit for a motor vehicle air-conditioning unit (1) with a compressor (4) that circulates a coolant (3), a condenser (6), an expansion element (8) and an evaporator (2), **characterised by** a cold storage accumulator (9) according to any of Claims 1 to 13.

15. Coolant circuit according to Claim 14, **characterised in that** viewed in the normal flow direction of the coolant (3), the cold storage accumulator (9) is positioned in the coolant circuit (5) after the evaporator (2) and before the compressor (4).

## Revendications

1. Accumulateur de froid comprenant un élément d'accumulateur de froid (10), en particulier pour un système de climatisation (1) d'un véhicule automobile, qui peut être utilisé dans un circuit de fluide frigorigène (5) et sert au refroidissement de l'air à climatiser pour un habitacle, en particulier du véhicule automobile, où un milieu d'accumulateur de froid (11) est contenu dans l'élément d'accumulateur de froid (10), où la plus petite dimension (d) de l'élément d'accumulateur de froid (10) est égale au maximum à 2,6 mm, et l'élément d'accumulateur de froid (10), au moins sur les deux côtés extérieurs qui sont placés l'un en face de l'autre en direction de la plus petite dimension (d), est en contact avec un milieu temporairement refroidissant et temporairement à refroidir,
**caractérisé en ce que** l'élément d'accumulateur de froid (10) est formé par au moins un conduit d'un tube plat (13) à conduits multiples, et le tube plat (13) à conduits multiples est enfoncé, pour le positionnement et la fixation, dans une plaque (15), à travers une ouverture (14) configurée en conséquence.

2. Accumulateur de froid selon la revendication 1, **caractérisé en ce que** la plus petite dimension (d) de l'élément d'accumulateur de froid (10) est égale au minimum à 0,4 mm.

3. Accumulateur de froid selon la revendication 1 ou 2, **caractérisé en ce que** l'épaisseur de paroi (s) de l'élément d'accumulateur de froid (10) est égale au maximum à 0,4 mm.

4. Accumulateur de froid selon l'une quelconque des revendications précédentes, **caractérisé en ce que** le rapport de la circonférence (U) dans une coupe transversale par rapport à l'étendue longitudinale de l'élément d'accumulateur de froid (10), sur le côté intérieur, relativement à la surface intérieure (F) de l'élément d'accumulateur de froid (10), englobée par ce côté intérieur, est compris entre 1/mm et 10/mm.

5. Accumulateur de froid selon l'une quelconque des revendications précédentes, **caractérisé en ce que** la conductibilité thermique de la paroi de l'élément d'accumulateur de froid (10) est comprise entre 100 W/mK et 500 W/mK, en particulier entre 200 W/mK et 300 W/mK.

6. Accumulateur de froid selon l'une quelconque des revendications précédentes, **caractérisé en ce que** la conductibilité thermique du milieu d'accumulateur de froid (11) est comprise entre 0,1 W/mK et 0,3 W/mK, en particulier entre 0,16 W/mK et 0,24 W/mK.

7. Accumulateur de froid selon l'une quelconque des revendications précédentes, **caractérisé en ce que** le milieu d'accumulateur de froid (11) est formé par un matériau à changement de phase (PCM).

8. Accumulateur de froid selon l'une quelconque des revendications précédentes, **caractérisé en ce que** le milieu d'accumulateur de froid (16 ; 26) est formé par des hydrates organiques, ou bien **en ce que** l'on utilise comme milieu d'accumulateur de froid (6), une solution saline, en particulier avec du LiClO₃H₂O.

9. Accumulateur de froid selon la revendication 8, **caractérisé en ce que** le milieu d'accumulateur de froid (16 ; 26) est formé par du décanol, du tétradécane, du pentadécane ou de l'hexadécane.

10. Accumulateur de froid selon l'une quelconque des revendications précédentes, **caractérisé en ce que** la température de changement de phase du milieu d'accumulateur de froid (16 ; 26) est dans une plage comprise entre 0°C et 30°C, en particulier entre 2°C et 15°C, en particulier de préférence entre 4°C et 12°C.

11. Accumulateur de froid selon l'une quelconque des revendications précédentes, **caractérisé en ce qu'**il est prévu une couche intermédiaire à l'intérieur de l'élément d'accumulateur de froid (5).

12. Accumulateur de froid selon la revendication 11, **caractérisé en ce que** la couche intermédiaire est formée par une tôle nervurée, une couche intermédiaire de turbulence, un tissu non tissé, un tissu à mailles tricotées ou bien une mousse.

13. Accumulateur de froid selon la revendication 11 ou 12, **caractérisé en ce que** la couche intermédiaire se compose de métal, en particulier d'aluminium, ou bien de matière plastique.

14. Circuit de fluide frigorigène pour un système de climatisation (1) d'un véhicule automobile comprenant un compresseur (4) faisant circuler le fluide frigorigène (3), un condenseur (6), un organe de détente (8) et un évaporateur (2), **caractérisé par** un accumulateur de froid (9) selon l'une quelconque des revendications 1 à 13.

15. Circuit de fluide frigorigène selon la revendication 14, **caractérisé en ce que** l'accumulateur de froid (9) est disposé, dans le circuit de fluide frigorigène (5), en aval de l'évaporateur (2) et en amont du compresseur (4), dans la direction normale d'écoulement du fluide frigorigène (3).
